# EUROPEAN PATENT APPLICATION

(11) **EP 4 325 809 A1**
(43) Date of publication of application: **21.02.2024**
(21) Application number: 22803718.0
(22) Date of filing: 18.04.2022
(51) Int. Cl.: H04L 67/01, G06F 3/14

(54) **CONTROL METHOD AND APPARATUS, ELECTRONIC DEVICE, AND READABLE STORAGE MEDIUM**

(30) Priority: 19.05.2021 CN 202110550723
(71) Applicant: Huawei Technologies Co., Ltd., Shenzhen, Guangdong 518129 (CN)
(72) Inventor: SUN, Xingyang, Shenzhen, Guangdong 518129 (CN)
(74) Representative: Maiwald GmbH
(86) International application number: PCT/CN2022/087427
(87) International publication number: WO 2022/242393

(57) **Abstract**

This application is applicable to the terminal field, and provides a control method and apparatus, an electronic device, and a readable storage medium. The control method includes: if an electronic device receives control data in a first format when determining that an input source device is connected to the electronic device in a wired manner, converting the control data in the first format into control data in a second format, where the second format is determined by the electronic device based on a type of an interface that connects the input source device and the electronic device; and sending the control data in the second format to the input source device through the interface that connects the input source device and the electronic device. After it is determined that the input source device is a wired input source device, the control data in the first format is obtained and is converted into a control data format, that is, the control data in the second format, supported by the interface that connects the input source device and the electronic device, and the control data in the second format is sent to the input source device through the interface, to control the input source device.

## Description

This application claims priority to Chinese Patent Application No. 202110550723.9, filed with the China National Intellectual Property Administration on May 19, 2021 and entitled "CONTROL METHOD AND APPARATUS, ELECTRONIC DEVICE, AND READABLE STORAGE MEDIUM", which is incorporated herein by reference in its entirety.

### TECHNICAL FIELD

This application relates to the terminal field, and in particular, to a control method and apparatus, an electronic device, and a readable storage medium.

### BACKGROUND

In an office scenario, an entertainment scenario, or the like, a display is an important device. An input source device such as a mobile phone, a notebook computer, or a tablet computer may be connected to the display, and transmit a picture to the display for display.

In the conventional technology, when the input source device is connected to the display, an external device such as a keyboard or a mouse may be connected to the display to control, by using the external device, the external device connected to the display.

However, when the external device is connected to the display in a wireless manner, the external device may be unable to effectively control the input source device.

### SUMMARY

Embodiments of this application provide a control method and apparatus, an electronic device, and a readable storage medium, to resolve a problem that when an external device is connected to a display in a wireless manner, the external device may be unable to effectively control an input source device.

According to a first aspect, an embodiment of this application provides a control method, including: if an electronic device receives control data in a first format when determining that an input source device is connected to the electronic device in a wired manner, converting the control data in the first format into control data in a second format, where the second format is determined by the electronic device based on a type of an interface that connects the input source device and the electronic device; and sending the control data in the second format to the input source device through the interface that connects the input source device and the electronic device.

In this application, the electronic device may be an electronic device that has a display function, such as a display, a smart screen, a projector, a television, or a large-screen device, and the input source device may be a device that can output video data, such as a smartphone, a tablet computer, a notebook computer, a desktop computer, a wearable device, an in-vehicle device, or an augmented reality (augmented reality, AR)/virtual reality (virtual reality, VR) device.

In the first aspect, after it is determined that the input source device is a wired input source device, the control data in the first format is obtained and is converted into a control data format, that is, the control data in the second format, supported by the interface that connects the input source device and the electronic device, and the control data in the second format is sent to the input source device through the interface, to control the input source device.

In some implementations, a processing module of the electronic device includes a central processing unit and a display processor, a first communication serial port on the display processor is connected to the central processing unit, and a first video interface on the display processor is connected to the interface that connects the input source device and the electronic device.

The determining that an input source device is connected to the electronic device in a wired manner includes: sending, by the display processor, a receiving status of the first video interface to the central processing unit through the first communication serial port, where the receiving status includes that video data is received or that no video data is received; and when the received receiving status of the first video interface is that video data is received, determining, by the central processing unit, that the input source device is connected to the electronic device in a wired manner.

In this embodiment, when the input source device is connected to the electronic device in a wired manner, the input source device sends video data through the first video interface on the display processor. When determining that the received video data is from the first video interface, the central processing unit may determine that the input source device is connected to the electronic device in a wired manner. In this manner, it can be accurately determined whether the input source device is connected to the electronic device in a wired manner, to determine whether a format of a control signal needs to be converted, thereby implementing reverse control on the input source device.

In some implementations, a processing module of the electronic device includes a central processing unit, and a second video interface on the central processing unit receives video data from the input source device.

The determining that an input source device is connected to the electronic device in a wired manner includes: when the video data received by the second video interface is uncoded video data, determining, by the central processing unit, that the input source device is connected to the electronic device in a wired manner.

In this embodiment, when the input source device is connected to the electronic device in a wired manner, the video data sent to the central processing unit through the second video interface is not coded. When determining that the received video data is uncoded video data, the central processing unit may determine that the input source device is connected to the electronic device in a wired manner. In this manner, it can be accurately determined whether the input source device is connected to the electronic device in a wired manner, to determine whether a format of a control signal needs to be converted, thereby implementing reverse control on the input source device.

In some implementations, a processing module of the electronic device includes a central processing unit, the central processing unit includes at least two video interfaces, the video interfaces are configured to receive video data from the input source device, and the electronic device respectively displays the video data from the video interfaces in different windows.

The determining that an input source device is connected to the electronic device in a wired manner includes: determining a first window in at least two windows, where the first window is an active window; and when video data received by a video interface corresponding to the first window is uncoded video data, determining, by the central processing unit, that an input source device corresponding to the first window is connected to the electronic device in a wired manner.

In this embodiment, at least two windows are displayed on the electronic device. It is determined that video data received by a video interface corresponding to an active window in the at least two windows is uncoded video data, to determine that an input source device corresponding to the active window is connected to the electronic device in a wired manner, so as to determine whether a format of a control signal needs to be converted, thereby implementing reverse control on the input source device.

In some implementations, a wireless module in the electronic device is connected to the central processing unit through a second communication serial port.

The receiving, by an electronic device, control data in a first format includes: receiving the control data in the first format through the second communication serial port.

In some implementations, a wireless control device is communicatively connected to the wireless module, and the control data in the first format is generated by the wireless control device in response to a user operation.

In some implementations, the wireless module is communicatively connected to a network, and the control data in the first format is control data received by the wireless module from the network.

In some implementations, when the electronic device supports an OTG protocol, the converting the control data in the first format into control data in a second format includes: converting, by the central processing unit, the control data in the first format into the control data in the second format.

In some implementations, when the electronic device does not support an OTG protocol, the electronic device includes a conversion chip, and a third communication serial port on the central processing unit is communicatively connected to the conversion chip.

The converting the control data in the first format into control data in a second format includes: sending, by the central processing unit, the control data in the first format to the conversion chip through the third communication serial port; and converting the control data in the first format into the control data in the second format by the conversion chip.

In some implementations, the electronic device further includes a speaker, and the video data received by the electronic device further includes audio data, and the electronic device plays the audio data by using the speaker.

In this embodiment, the speaker is added to the electronic device, so that corresponding audio data is played while video data is displayed, and a user does not need to purchase an additional sound playing device, thereby improving use experience of the user.

In some implementations, the electronic device further includes a microphone, and the electronic device sends audio data collected by the microphone to the input source device through the interface that connects the input source device and the electronic device.

In this embodiment, the microphone is added to the electronic device, so that audio data is collected for use by the input source device while the input source device is controlled, and a user does not need to purchase an additional sound collection device, thereby improving use experience of the user.

According to a second aspect, an embodiment of this application provides a control apparatus, including:
a conversion module, configured to: if an electronic device receives control data in a first format when determining that an input source device is connected to the electronic device in a wired manner, convert the control data in the first format into control data in a second format, where the second format is determined by the electronic device based on a type of an interface that connects the input source device and the electronic device; and
a sending module, configured to send the control data in the second format to the input source device through the interface that connects the input source device and the electronic device.

In some implementations, a processing module of the electronic device includes a central processing unit and a display processor, a first communication serial port on the display processor is connected to the central processing unit, and a first video interface on the display processor is connected to the interface that connects the input source device and the electronic device.

The display processor sends a receiving status of the first video interface to the central processing unit through the first communication serial port, where the receiving status includes that video data is received or that no video data is received. The control apparatus further includes a determining module, configured to: when the received receiving status of the first video interface is that video data is received, determine that the input source device is connected to the electronic device in a wired manner.

In some implementations, a processing module of the electronic device includes a central processing unit, and a second video interface on the central processing unit receives video data from the input source device.

When the video data received by the second video interface is uncoded video data, the determining module is specifically configured to determine that the input source device is connected to the electronic device in a wired manner.

In some implementations, a processing module of the electronic device includes a central processing unit, the central processing unit includes at least two video interfaces, the video interfaces are configured to receive video data from the input source device, and the electronic device respectively displays the video data from the video interfaces in different windows.

The determining module is further configured to: determine a first window in at least two windows, where the first window is an active window; and when video data received by a video interface corresponding to the first window is uncoded video data, determine that an input source device corresponding to the first window is connected to the electronic device in a wired manner.

In some implementations, a wireless module in the electronic device is connected to the central processing unit through a second communication serial port.

The control apparatus further includes a receiving module, configured to receive the control data in the first format through the second communication serial port.

In some implementations, a wireless control device is communicatively connected to the wireless module, and the control data in the first format is generated by the wireless control device in response to a user operation.

In some implementations, the wireless module is communicatively connected to a network, and the control data in the first format is control data received by the wireless module from the network.

In some implementations, when the electronic device supports an OTG protocol, the conversion module is specifically configured to convert the control data in the first format into the control data in the second format by using the central processing unit.

In some implementations, when the electronic device does not support an OTG protocol, the electronic device includes a conversion chip, and a third communication serial port on the central processing unit is communicatively connected to the conversion chip.

The conversion module is specifically configured to: send the control data in the first format to the conversion chip through the third communication serial port, and convert the control data in the first format into the control data in the second format by using the conversion chip.

In some implementations, the electronic device further includes a speaker, and the video data received by the electronic device further includes audio data. The control apparatus further includes a playing module, configured to play the audio data through the speaker.

In some implementations, the electronic device further includes a microphone. The control apparatus further includes a sound collection module, configured to send audio data collected by the microphone to the input source device through the interface that connects the input source device and the electronic device.

According to a third aspect, an embodiment of this application provides an electronic device, including a memory, a processor, and a computer program that is stored in the memory and that can be run on the processor. When the processor executes the computer program, the method provided in the first aspect is implemented.

According to a fourth aspect, an embodiment of this application provides a computer-readable storage medium. The computer-readable storage medium stores a computer program, and when the computer program is executed by a processor, the method provided in the first aspect is implemented.

According to a fifth aspect, an embodiment of this application provides a computer program product. When the computer program product runs on a terminal device, the terminal device is enabled to perform the method provided in the first aspect.

According to a sixth aspect, an embodiment of this application provides a chip system. The chip system includes a memory and a processor. The processor executes a computer program stored in the memory, to implement the method provided in the first aspect.

According to a seventh aspect, an embodiment of this application provides a chip system. The chip system includes a processor, the processor is coupled to the computer-readable storage medium provided in the fourth aspect, and the processor executes the computer program stored in the computer-readable storage medium, to implement the method provided in the first aspect.

It may be understood that, for beneficial effects of the second aspect to the seventh aspect, refer to related descriptions in the first aspect. Details are not described herein again.

### BRIEF DESCRIPTION OF DRAWINGS

FIG. 1 is a schematic diagram of an application scenario of a control method according to an embodiment of this application;
FIG. 2 is a schematic diagram of a structure of an electronic device according to an embodiment of this application;
FIG. 3 is a schematic diagram of a software structure of an electronic device according to an embodiment of this application;
FIG. 4 is a schematic flowchart of a control method according to an embodiment of this application;
FIG. 5 is a schematic diagram of a structure of an electronic device to which a control method is applied according to an embodiment of this application;
FIG. 6 is a schematic diagram of a structure of another electronic device to which a control method is applied according to an embodiment of this application;
FIG. 7 is a schematic diagram of an interface displayed on an electronic device when a control method is applied according to an embodiment of this application;
FIG. 8 is a schematic diagram of another scenario used when a control method is applied according to an embodiment of this application;
FIG. 9 is a schematic diagram of another scenario used when a control method is applied according to an embodiment of this application;
FIG. 10 is a schematic diagram of a data stream applied to a control method according to an embodiment of this application;
FIG. 11 is a schematic diagram of a data stream applied to another control method according to an embodiment of this application;
FIG. 12 is a schematic diagram of another scenario used when a control method is applied according to an embodiment of this application;
FIG. 13 is a block diagram of a structure of a control apparatus according to an embodiment of this application;
FIG. 14 is a block diagram of a structure of another control apparatus according to an embodiment of this application;
FIG. 15 is a block diagram of a structure of another control apparatus according to an embodiment of this application;
FIG. 16 is a block diagram of a structure of another control apparatus according to an embodiment of this application;
FIG. 17 is a block diagram of a structure of another control apparatus according to an embodiment of this application; and
FIG. 18 is a schematic diagram of a structure of another electronic device according to an embodiment of this application.

### DESCRIPTION OF EMBODIMENTS

In the following descriptions, for illustration instead of limitation, specific details of a particular system structure, a technology, and the like are provided to make a thorough understanding of embodiments of this application. However, persons skilled in the art should know that this application can also be implemented in other embodiments without these specific details. In other cases, detailed descriptions of well-known systems, apparatuses, circuits, and methods are omitted, so that this application is described without being obscured by unnecessary details.

It should be understood that the term "and/or" used in the specification and the appended claims of this application refers to any combination of and all possible combinations of one or more associated listed items, and includes these combinations.

As used in the specification and the appended claims of this application, the term "if" may be interpreted based on context as "when", "once", "in response to determining that", or "in response to detecting that".

In addition, in the descriptions of the specification and the appended claims of this application, the terms "first", "second", "third", and the like are merely used for distinguishing between descriptions, and cannot be understood as an indication or implication of relative importance.

Reference to "one embodiment", "some embodiments", or the like described in the specification of this application means that one or more embodiments of this application include a specific feature, structure, or characteristic described with reference to the embodiment. Therefore, statements such as "in an embodiment", "in some embodiments", "in other embodiments", and "in some other embodiments" that appear at different places in the specification do not necessarily mean referring to a same embodiment. Instead, the statements mean "one or more but not all of embodiments", unless otherwise specifically emphasized in another manner. The terms "include", "contain", "have", and variants thereof all mean "including but are not limited to", unless otherwise specifically emphasized in another manner.

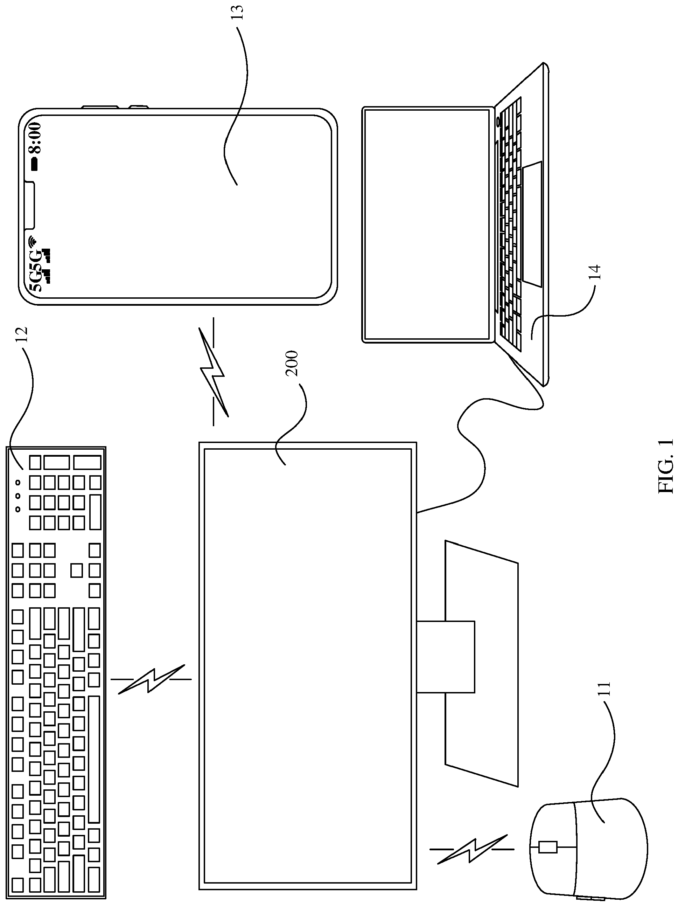

FIG. 1 shows an application scenario of a control method.

As shown in FIG. 1, the application scenario includes: wireless external devices such as a Bluetooth mouse 11 and a Bluetooth keyboard 12, a wireless input source device such as a smartphone 13 or a tablet computer (not shown), and a wired input source device such as a notebook computer 14 or a desktop host (not shown). The wireless external device is communicatively connected to an electronic device 200 through Bluetooth, the wired input source device may be communicatively connected to the electronic device 200 by using a universal serial bus Type-C (Universal Serial Bus Type-C, Type-C), and the wireless input source device may be communicatively connected to the electronic device 200 by using a wireless network (Wireless Fidelity, Wi-Fi).

The electronic device 200 may be a display having a wireless communication module. After the wired input source device or the wireless input source device is connected to the electronic device 200, the electronic device 200 may display a picture of the input source device connected to the electronic device 200. In addition, the electronic device 200 may further receive control data from the wireless external device, and forward the control data to the input source device to control the input source device.

However, when transmitting the control data to the electronic device 200, the wireless external device transmits the control data by using a universal asynchronous receiver/transmitter (Universal Asynchronous Receiver/Transmitter, UART) or a serial port such as a bidirectional two-wire synchronous serial (Inter-Integrated Circuit, I2C) bus. However, for an input source accessed in a wired manner, an interface accessed by the wired input source may not match an interface for transmitting the control data. As a result, the control data cannot be transmitted to the wired input source, that is, the wired input source device cannot be controlled by using the wireless external device.

Therefore, this application provides a control method, including: when control data in a first format is obtained after it is determined that an input source device is connected to an electronic device in a wired manner, converting the control data in the first format into control data in a second format, where the second format is a control data format supported by an interface that connects the input source device and the electronic device; and then sending the control data in the second format to the input source device through the interface through which the input source device accesses the electronic device.

In this application, after it is determined that the input source device is a wired input source device, the control data in the first format from a wireless external device is intercepted and is converted into the control data format supported by the interface that connects the input source device and the electronic device, and the control data is sent to the input source device through the interface, to control the input source device.

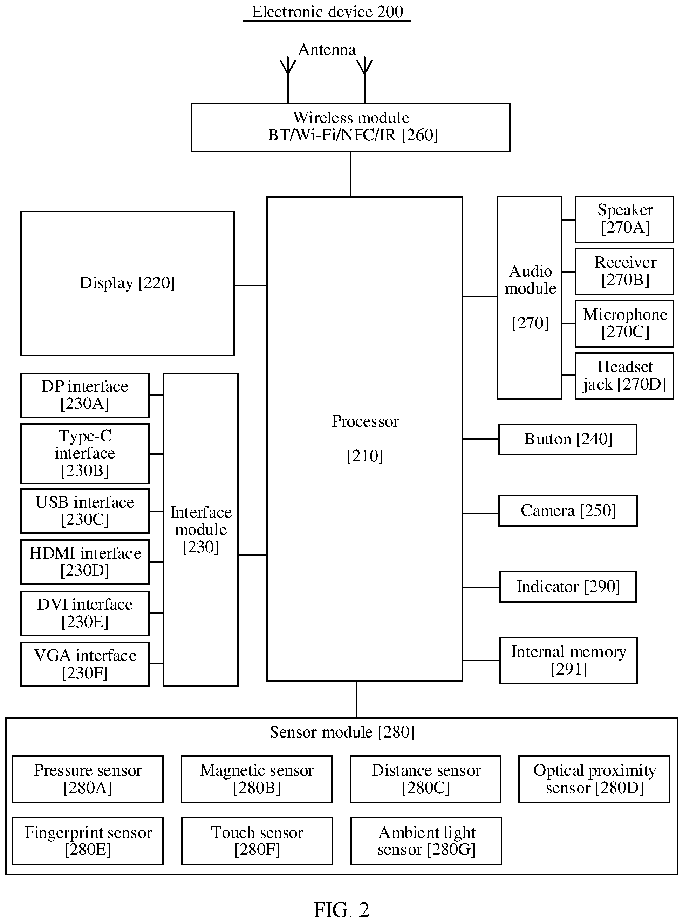

FIG. 2 is a schematic diagram of a structure of an electronic device. The electronic device 200 may include a processor 210, a display 220, an interface module 230, a button 240, a camera 250, an antenna, a wireless module 260, an audio module 270, a sensor module 280, an indicator 290, an internal memory 291, and the like. The interface module 230 may include a display port (Display Port, DP) 230A, a Type-C interface 230B, a universal serial bus Type-A (Universal Serial Bus Type-A, USB) interface 230C, a high definition multimedia interface (High Definition Multimedia Interface, HDMI) 230D, a digital visual interface (Digital Visual Interface, DVI) 230E, a video graphics array (Video Graphics Array, VGA) interface 230F, and the like. The audio module 270 may include a speaker 270A, a receiver 270B, a microphone 270C, a headset jack 270D, and the like. The sensor module 280 may include a pressure sensor 280A, a magnetic sensor 280B, a distance sensor 280C, an optical proximity sensor 280D, a fingerprint sensor 280E, a touch sensor 280F, an ambient light sensor 280G, and the like.

It can be understood that, the structure shown in this embodiment of this application constitutes no specific limitation on the electronic device 200. In some other embodiments of this application, the electronic device 200 may include more or fewer components than those shown in the figure, or combine some components, or split some components, or have different component arrangements. The components shown in the figure may be implemented by hardware, software, or a combination of software and hardware.

For example, when the electronic device 200 is a display, the electronic device 200 may include all components in the figure, or may include only some components in the figure.

The processor 210 may include one or more processing units. For example, the processor 210 may include one or more of an application processor (application processor, AP), a system on chip (System on Chip, SoC), a display processor (scaler), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

In an implementation, the processor 210 may include a central processing unit (for example, the central processing unit may be an SoC) and a display processor (for example, the display processor may be a scaler). The central processing unit and the display processor are independent of each other and communicate with each other through a serial port.

In another implementation, the display processor may be integrated into the central processing unit, that is, the SoC has a function of the scaler. In this case, the processor 210 includes only the central processing unit.

A memory may be further disposed in the processor 210, and is configured to store instructions and data. In some embodiments, the memory in the processor 210 is a cache. The memory may store instructions or data just used or cyclically used by the processor 210. If the processor 210 needs to use the instructions or the data again, the processor 210 may directly invoke the instructions or the data from the memory. This avoids repeated access and reduces waiting time of the processor 210, thereby improving system efficiency.

In some embodiments, the processor 210 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 210 may include a plurality of groups of I2C buses. The processor 210 may be separately coupled to the touch sensor 280F, the camera 250, and the like through different I2C bus interfaces. For example, the processor 210 may be coupled to the touch sensor 280F through the I2C interface, so that the processor 210 communicates with the touch sensor 280F through the I2C bus interface, to implement a touch function of the electronic device 200.

The I2S interface may be configured to perform audio communication. In some embodiments, the processor 210 may include a plurality of groups of I2S buses. The processor 210 may be coupled to the audio module 270 through the I2S bus, to implement communication between the processor 210 and the audio module 270. In some embodiments, the audio module 270 may transfer an audio signal to the wireless module 260 through the I2S interface.

The PCM interface may also be configured to perform audio communication, and sample, quantize, and code an analog signal. In some embodiments, the audio module 270 may be coupled to the wireless module 260 through a PCM bus interface.

In some embodiments, the audio module 270 may also transfer an audio signal to the wireless communication module 260 through the PCM interface. Both the I2S interface and the PCM interface may be configured to perform audio communication.

The UART interface is a universal serial data bus, and is configured to perform asynchronous communication. The bus may be a two-way communication bus, and converts to-be-transmitted data between serial communication and parallel communication.

In some embodiments, the UART interface is usually configured to connect the processor 210 and the wireless module 260. For example, the processor 210 communicates with a Bluetooth module in the wireless module 260 through the UART interface, to implement a Bluetooth function. In some embodiments, the audio module 270 may transfer an audio signal to the wireless module 260 through the UART interface, to implement a function of playing music by using a Bluetooth headset.

The MIPI interface may be configured to connect the processor 210 to a peripheral component such as the display 220 or the camera 250. The MIPI interface includes a camera serial interface (camera serial interface, CSI), a display serial interface (display serial interface, DSI), and the like.

In some embodiments, the processor 210 communicates with the camera 250 through the CSI interface, to implement a photographing function of the electronic device 200. The processor 210 communicates with the display 220 through the DSI interface, to implement a display function of the electronic device 200.

The GPIO interface may be configured by software. The GPIO interface may be configured as control data or may be configured as a data signal.

In some embodiments, the GPIO interface may be configured to connect the processor 210 to the camera 250, the display 220, the wireless module 260, the audio module 270, the sensor module 280, and the like. The GPIO interface may alternatively be configured as an I2C interface, an I2S interface, a UART interface, an MIPI interface, or the like.

The interface module 230 is a module configured to connect to an input source device and an external device. A Type-C interface may be simultaneously used as a DP interface, a USB interface, and a charging interface. The charging interface is connected to a power management module, and may be configured to charge the input source device. The DP interface and the HDMI interface can transmit audio while transmitting an image.

It may be understood that, an interface connection relationship between the modules shown in this embodiment of this application is merely an example for description, and does not constitute a limitation on the structure of the electronic device 200.

In some other embodiments of this application, the electronic device 200 may alternatively use an interface connection manner different from that in the foregoing embodiment, or use a combination of a plurality of interface connection manners.

A wireless function of the electronic device 200 may be implemented by using the antenna and the wireless module 260.

The antenna is configured to transmit and receive an electromagnetic wave signal. Each antenna in the electronic device 200 may be configured to cover one or more communication frequency bands. Different antennas may be further multiplexed to improve antenna utilization. For example, the antenna may be multiplexed as a diversity antenna in a wireless local area network. In some other embodiments, the antenna may be used in combination with a tuning switch.

The wireless communication module 260 may provide a solution for wireless communication including a wireless local area network (wireless local area network, WLAN) (such as a wireless fidelity (wireless fidelity, Wi-Fi) network), Bluetooth (Bluetooth, BT), a near field communication (near field communication, NFC) technology, an infrared (infrared, IR) technology, and the like applied to the electronic device 200. The wireless module 260 may be one or more components integrating at least one communication processing module. The wireless module 260 receives an electromagnetic wave by using the antenna, performs frequency modulation and filtering processing on an electromagnetic wave signal, and sends a processed signal to the processor 210. The wireless module 260 may further receive a to-be-sent signal from the processor 210, perform frequency modulation and amplification on the to-be-sent signal, and convert, by using the antenna, the signal into an electromagnetic wave for radiation.

In some embodiments, the antenna is coupled to the wireless communication module 260, so that the electronic device 200 can communicate with a network and another device by using a wireless communication technology. The wireless communication technology may include BT, a WLAN, NFC, an IR technology, and/or the like.

The electronic device 200 may implement a display function by using the scaler, the display 220, the application processor, and the like. The scaler may be an independent chip, or may be integrated into the processor 210. For example, when the processor 210 is an SoC, the SoC may be connected to the scaler through the HDMI interface and the UART interface, and the scaler is connected to the display 220 to implement the display function. Alternatively, the SoC may integrate a function of the scaler, and the SoC is directly connected to the display 220 to implement the display function.

The display 220 is configured to display an image, a video, and the like. For example, in a teaching video and a user action picture video in this embodiment of this application, the display 220 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini-LED, a micro-LED, a micro-OLED, a quantum dot light emitting diode (quantum dot light emitting diode, QLED), or the like. In some embodiments, the electronic device 200 may include one or N displays 220, where N is a positive integer greater than 1.

The internal memory 291 may be configured to store computer-executable program code. The executable program code includes instructions. The processor 210 runs the instructions stored in the internal memory 291 to perform various functional applications and data processing of the electronic device 200. The internal memory 291 may include a program storage area and a data storage area. The program storage area may store an operating system, an application program required by at least one function (for example, a sound playing function or an image playing function), and the like. The data storage area may store data (such as audio data and video data) created during use of the electronic device 200.

In addition, the internal memory 291 may include a high-speed random access memory, and may further include a non-volatile memory, for example, at least one magnetic disk storage device, a flash memory, or a universal flash storage (universal flash storage, UFS).

The electronic device 200 may implement an audio function by using the audio module 270, the speaker 270A, the receiver 270B, the microphone 270C, the headset jack 270D, the application processor, and the like.

The audio module 270 is configured to convert a digital audio signal into an analog audio signal for output, and is also configured to convert analog audio input into a digital audio signal. The audio module 270 may be further configured to code and decode an audio signal. In some embodiments, the audio module 270 may be disposed in the processor 210, or some functional modules in the audio module 270 are disposed in the processor 210.

The speaker 270A, also referred to as a "loudspeaker", is configured to convert an audio electrical signal into a sound signal. The electronic device 200 may be used to listen to music or answer a call in a hands-free mode over the speaker 270A. For example, the speaker may play a comparison analysis result provided in this embodiment of this application.

The receiver 270B, also referred to as an "earpiece", is configured to convert an audio electrical signal into a sound signal. When the electronic device 200 is used to answer a call or listen to speech information, the receiver 270B may be put close to a human ear to listen to a speech.

The microphone 270C, also referred to as a "mike" or a "mic", is configured to convert a sound signal into an electrical signal. When making a call or sending a speech message, a user may make a sound near the microphone 270C through the mouth of the user, to input a sound signal to the microphone 270C. At least one microphone 270C may be disposed in the electronic device 200.

In some other embodiments, two microphones 270C may be disposed in the electronic device 200, to implement a noise reduction function in addition to collecting a sound signal. In some other embodiments, three, four, or more microphones 270C may alternatively be disposed in the electronic device 200, to collect a sound signal and reduce noise. Alternatively, a sound source may be further identified, to implement a directional recording function, or the like.

The headset jack 270D is configured to connect to a wired headset. The headset jack 270D may be the USB interface 230, or may be a 3.5 mm open mobile terminal platform (open mobile terminal platform, OMTP) standard interface, or a cellular telecommunications industry association of the USA (cellular telecommunications industry association of the USA, CTIA) standard interface.

The pressure sensor 280A is configured to sense a pressure signal, and may convert the pressure signal into an electrical signal. In some embodiments, the pressure sensor 280A may be disposed on the display 220. There are many types of pressure sensors 280A, such as a resistive pressure sensor, an inductive pressure sensor, and a capacitive pressure sensor. The capacitive pressure sensor may include at least two parallel plates made of conductive materials. When force is applied to the pressure sensor 280A, capacitance between electrodes changes. The electronic device 200 determines pressure intensity based on the capacitance change. When a touch operation is performed on the display 220, the electronic device 200 detects intensity of the touch operation based on the pressure sensor 280A. The electronic device 200 may also calculate a touch location based on a detection signal of the pressure sensor 280A.

In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to the first pressure threshold is performed on the SMS message application icon, an instruction for creating a new SMS message is performed.

The magnetic sensor 280B includes a Hall effect sensor. The electronic device 200 may detect, by using the magnetic sensor 280B, an opening/closing state of a magnetic peripheral.

In some embodiments, when the electronic device 200 is configured with a protective leather case, the electronic device 200 may detect opening/closing of the protective leather case based on the magnetic sensor 280B, and further sets a feature such as automatic unlocking when the leather case is opened is set according to the detected opening and closing state of the leather case.

The distance sensor 280C is configured to measure a distance. The electronic device 200 may measure a distance in an infrared manner or a laser manner. In some embodiments, in a photographing scenario, the electronic device 200 may measure a distance by using the distance sensor 280F, to implement quick focusing.

The optical proximity sensor 280D may include, for example, a light-emitting diode (LED) and an optical detector such as a photodiode. The light-emitting diode may be an infrared light-emitting diode. The electronic device 200 emits infrared light to the outside by using the light-emitting diode. The electronic device 200 detects infrared reflected light from a nearby object through the photodiode. When detecting sufficient reflected light, the electronic device 200 may determine that there is an object near the electronic device 200; or when detecting insufficient reflected light, the electronic device 200 may determine that there is no object near the electronic device 200. The electronic device 200 may detect, by using the optical proximity sensor 280D, whether a user is excessively close to the electronic device 200, and the like.

The ambient light sensor 280G is configured to sense ambient light brightness. The electronic device 200 may adaptively adjust brightness of the display 220 based on the sensed ambient light brightness. The ambient light sensor 280G may also be configured to automatically adjust white balance during photographing.

The fingerprint sensor 280E is configured to collect a fingerprint. The electronic device 200 may implement functions such as fingerprint-based unlocking by using a feature of the collected fingerprint.

The touch sensor 280F is also referred to as a "touch panel". The touch sensor 280F may be disposed on the display 220, and the touch sensor 280F and the display 220 form a touchscreen, which is also referred to as a "touch control screen". The touch sensor 280F is configured to detect a touch operation performed on or near the touch sensor 280F. The touch sensor may transfer the detected touch operation to the application processor to determine a type of a touch event, and may output, by using the display 220, a visual output related to the touch operation. In some other embodiments, the touch sensor 28020 may alternatively be disposed on a surface of the electronic device 200 at a location different from that of the display 220.

The button 240 includes a power on/off button, a volume button, and the like. The button 290 may be a mechanical button, or may be a touch button. The electronic device 200 may receive a key input, and generate a key signal input related to user settings and function control of the electronic device 200.

The indicator 290 may be an indicator light, for example, a light-emitting diode (Light-Emitting Diode, LED) light indicating a power-on status, or an LED light indicating a device access status.

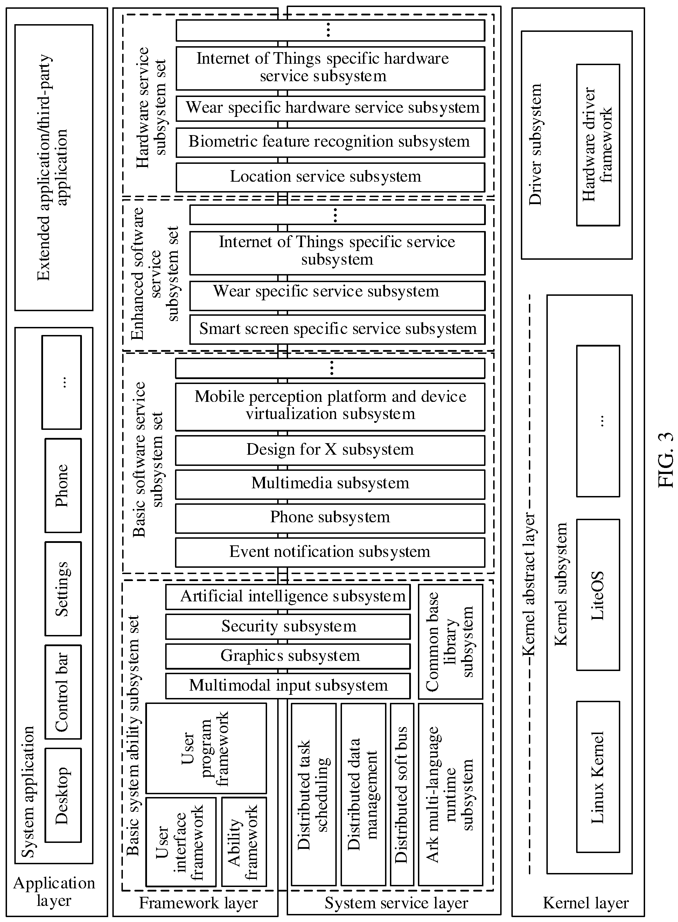

FIG. 3 is a schematic diagram of a software structure of an electronic device according to an embodiment of this application. An operating system in the electronic device may be an Android (Android) system, a Linux (Linux) system, a Harmony system (Harmony OS), or the like. Herein, an example in which the operating system in the electronic device is the Harmony system is used for description.

In some embodiments, the Harmony system may be divided into four layers, including a kernel layer, a system service layer, a framework layer, and an application layer. The layers communicate with each other through a software interface.

As shown in FIG. 3, the kernel layer includes a kernel abstraction layer (Kernel Abstract Layer, KAL) and a driver subsystem. The KAL includes a plurality of kernels, such as a Linux kernel in the Linux system and a kernel LiteOS in a lightweight Internet of Things system. The driver subsystem may include a hardware driver foundation (Hardware Driver Foundation, HDF). The hardware driver foundation can provide a unified peripheral access ability, unified driver development, and a unified management framework. The multi-kernel kernel layer may select, based on a system requirement, a corresponding kernel for processing.

The system service layer is a core ability set of the Harmony system. The system service layer provides a service an application program through the framework layer. The layer may include the following.

A basic system ability subsystem set provides basic capabilities for operations such as running, scheduling, and migration applied in a distributed manner to a plurality of devices with the Harmony system, and may include subsystems such as a distributed soft bus, distributed data management, distributed task scheduling, Ark multi-language runtime, a common base library, multimodal input, graphics, security, artificial intelligence (Artificial Intelligence, AI), and a user program framework.

The Ark multi-language runtime provides C, C++, or JavaScript (JS) multi-language runtime and a basic system class library, and may also provide runtime for a Java program (that is, a part developed by using a Java language at the application program layer or the framework layer) that is staticized by using an Ark compiler.

A basic software service subsystem set provides common and general software services for the Harmony system, and may include subsystems such as event notification, phone, multimedia, design for X (Design For X, DFX), and MSDP&DV.

An enhanced software service subsystem set provides differentiated ability-enhanced software services for different devices, and may include subsystems such as a smart screen specific service, a wear specific service, and an Internet of Things (Internet of Things, IoT) specific service.

A hardware service subsystem set provides hardware services for the Harmony system, and may include subsystems such as a location service, biometric feature recognition, a wear specific hardware service, and an IoT specific hardware service.

The framework layer provides, for Harmony system application development, a user program framework and an ability (Ability) framework in a plurality of languages such as Java, C, C++, and JS, two user interface (User Interface, UI) frameworks (including a Java UI framework applicable to the Java language and a JS UI framework applicable to the JS language), and multi-language framework application programming interfaces (Application Programming Interface, API) that are of various software and hardware services and that are open to the outside. An API supported by a device with the Harmony varies based on a degree of component-based clipping in the system.

The application layer includes a system application and a third-party non-system application. The system application may include application programs, such as a desktop, a control bar, settings, and phone, that are installed on the electronic device by default. An extended application may be an unnecessary application developed and designed by a manufacturer of the electronic device, for example, an application program such as an electronic device manager, phone clone, Notepad, or weather. The third-party non-system application may be an application program that is developed by another manufacturer but can run in the Harmony system, for example, an application program such as a game, navigation, social networking, or shopping.

Application of the Harmony system includes one or more feature abilities (Feature Ability, FA) or particle abilities (Particle Ability, PA). The FA has a UI interface and provides an ability of interacting with a user. The PA has no UI, and provides an ability of running a task in the background and unified data access abstraction. The PA mainly provides support for the FA, for example, provides a computing ability as a background service or provides a data access ability as a data warehouse. An application developed based on the FA or the PA can implement a specific service function, support cross-device scheduling and distribution, and provides a user with consistent and efficient application experience.

Mutual hardware assistance and resource sharing can be implemented between a plurality of electronic devices running the Harmony system by using the distributed soft bus, distributed device virtualization, distributed data management, and distributed task scheduling.

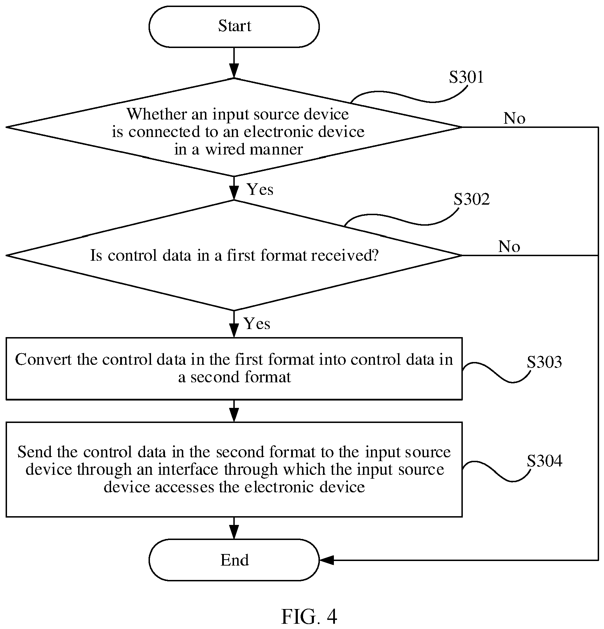

FIG. 4 is a schematic flowchart of a control method according to this application. As an example instead of a limitation, the control method may be applied to the foregoing electronic device 200.

S301: The electronic device determines whether an input source device accesses the electronic device in a wired manner; and performs S302 if the input source device accesses the electronic device in a wired manner; or ends the procedure if the input source device does not access the electronic device in a wired manner.

In some implementations, when accessing the electronic device in a wired manner, the input source device needs to be connected to both a video data interface and a control data transmission interface. For example, the input source device may be connected to the electronic device through a reusable interface, for example, may be connected to the electronic device through a Type-C interface. The Type-C interface may be in a DP alternate mode (DP Alt Mode) to implement a function of a DP interface by using a transmit/receive data pin in the Type-C interface, to transmit video data, and may further implement a function of a USB 2.0 interface by using two USB 2.0 data pins, to transmit control data.

For example, in the Type-C interface, data pins include a USB 2.0 positive pin (D+), a USB 2.0 negative pin (D-), a first positive transmit pin (TX1+), a first negative transmit pin (TX1-), a second positive transmit pin (TX2+), a second negative transmit pin (TX2-), a first positive receive pin (RX1+), a first negative receive pin (RX1-), a second positive receive pin (RX2+), and a second negative receive pin (RX2-). During data transmission, the data pins are classified into five groups of data pins based on receiving, sending, and positive and negative electrodes. For example, D+ and D- are a group of data pins, TX1+ and RX1- are a group of data pins, RX1+ and TX1- are a group of data pins, TX2+ and RX2- are a group of data pins, and RX2+ and TX2- are a group of data pins. Each group of data pins can be used to receive and send data.

For example, a USB 2.0 data signal (that is, the control data in this application) may be transmitted by using D+ and D-; a USB 3.0 data signal may be transmitted by using TX1+ and RX1-, and RX1+ and TX1-; and two DP signals (a DP main lane 1 and a DP main lane 0) are respectively transmitted by using TX2+ and RX2-, and RX2+ and TX2-.

Alternatively, two DP signals (a DP main lane 2 and a DP main lane 3) may be respectively transmitted by using TX1+ and RX1-, and RX1+ and TX1-, and two DP signals (a DP main lane 1 and a DP main lane 0) may be respectively transmitted by using TX2+ and RX2-, and RX2+ and TX2-. If a PD controller detects, by using CC1 and CC2, that the pin of the Type-C needs to be flipped, two DP signals (a DP main lane 1 and a DP main lane 0) may be respectively transmitted by using TX1+ and RX1-, and RX1+ and TX1-, and two DP signals (a DP main lane 2 and a DP main lane 3) may be respectively transmitted by using TX2+ and RX2-, and RX2+ and TX2-.

Because positive-negative distinguishing is not required for the Type-C interface, whether the data pin needs to be flipped may be detected by using the pin CC1 and the pin CC2. When it is detected, by using the pin CC1 and the pin CC2, that a Type-C interface (male port) connected to a data line matches the Type-C interface (female port) of the electronic device, the pin does not need to be flipped, and the foregoing pins may be used to transmit a DP signal, a USB 2.0 data signal, or a USB 3.0 data signal. When it is detected, by using the pin CC1 and the pin CC2, that the Type-C interface connected to the data line does not match the Type-C interface of the electronic device, the pin of the Type-C needs to be flipped, and a DP signal, a USB 2.0 data signal, or a USB 3.0 data signal is transmitted by using a corresponding flipped pin.

It should be noted that, when the DP signal is transmitted by using the foregoing pin, an audio signal may be further transmitted by using a sideband use (Sideband Use, SBU) 1 and an SBU 2, to implement simultaneous transmission of audio and a video.

Alternatively, the input source device may be connected to the electronic device separately through a video transmission interface and a control data transmission interface. For example, the input source device may be connected to the electronic device through a video interface such as a DP interface/HDMI interface/DVI interface/VGA interface, to transmit video data. In addition, the input source device is further connected to the electronic device through a USB interface, to transmit control data.

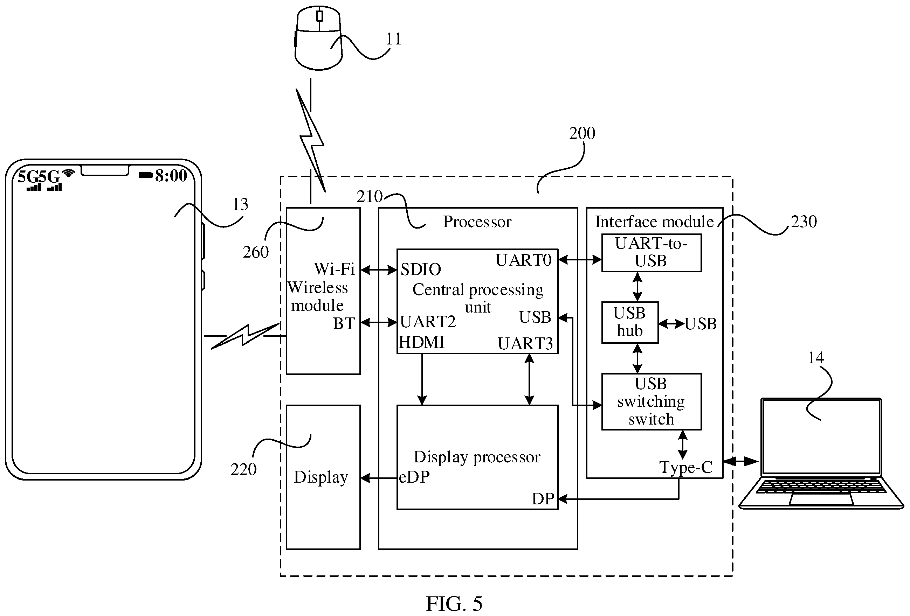

FIG. 5 is a schematic diagram of a structure of an electronic device to which a control method provided in this application may be applied.

As shown in FIG. 2 and FIG. 5, in this embodiment, a processor 210 of an electronic device 200 shown in FIG. 5 includes a central processing unit (for example, an SoC) and a display processor (for example, a scaler) that are independent of each other. Video data is transmitted between the SoC and the scaler through a video transmission interface. The video transmission interface may include an HDMI interface, a DP interface, an embedded video interface (Embedded Display Port, eDP), or the like. Control data may be further transmitted between the SoC and the scaler through a serial port. The serial port may include a UART interface, an I2C interface, or the like. A Bluetooth mouse 11 is connected to the electronic device 200 through Bluetooth, a smartphone 13 is connected to the electronic device 200 through Wi-Fi, and a notebook computer 14 is connected to the electronic device 200 through a Type-C interface.

In this embodiment, the scaler may display one piece of video data. When the scaler displays video data from the SoC, it is determined that the input source device is a wireless input source device. When the scaler displays video data from the scaler, it is determined that the input source device is a wired input source device.

For example, as shown in FIG. 5, when the scaler responds to control data transmitted through a UART3 interface, to receive, through the HDMI interface, video data that is from the smartphone and that is sent by the SoC, and process the video data and the sends processed video data to a display through the eDP for display, it may be determined that the input source accesses the electronic device in a wireless manner. When the DP interface of the scaler receives video data from the notebook computer 14, the scaler performs negotiation handshake with the input source device by using a DP protocol, and after the negotiation handshake succeeds, sends, through the eDP interface, the video data received by the DP interface to the display for display. In this case, it may be determined that the input source accesses the electronic device in a wired manner.

It should be noted that, in this embodiment, the DP interface may alternatively be another data interface, for example, an HDMI, a DVI, or a VGA, and an interface type of the DP interface is not limited. Similarly, the HDMI interface may alternatively be another data interface, for example, a DP, a DVI, or a VGA.

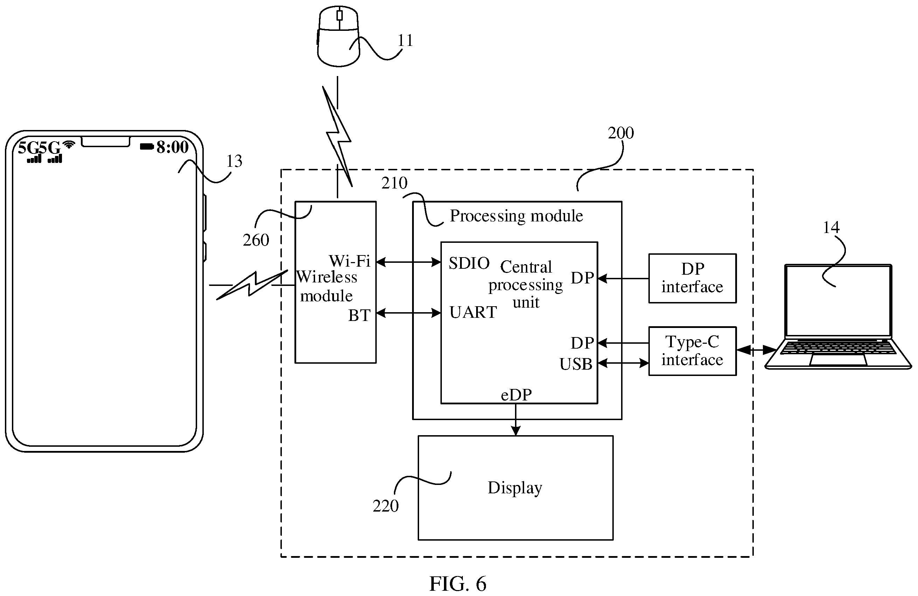

FIG. 6 is a schematic diagram of a structure of an electronic device to which a control method provided in this application may be applied.

As shown in FIG. 2 and FIG. 6, in this embodiment, a processor 210 of an electronic device 200 shown in FIG. 6 includes a central processing unit (SoC), and the central processing unit integrates a function of a display processor (scaler). A Bluetooth mouse 11 is connected to the electronic device 200 through Bluetooth, a smartphone 13 is connected to the electronic device 200 through Wi-Fi, and a notebook computer 14 is connected to the electronic device 200 through a Type-C interface.

In this embodiment, the electronic device may display only one piece of video data, or may simultaneously display at least two pieces of video data on a screen.

When the electronic device displays only one piece of video data, a source of the video data may be obtained by using the SoC. When the video data is from an input interface connected to a wireless module, it is determined that the input source device is a wireless input source device. The wireless module may receive video data from the wireless input source device by using a wireless transmission protocol such as Wi-Fi, Bluetooth, or NFC. After receiving the video data, the wireless module sends the video data to the SoC through an input interface that connects the wireless module and the SoC. The input interface that connects the wireless module and the SoC may include a secure digital input/output (Secure Digital Input and Output Card, SDIO) interface, a high-speed serial computer extension bus standard (Peripheral Component Interconnect Express, PCIE) interface, Wi-Fi accessed through a USB interface, or the like.

However, when the video data is from a wired interface (for example, a DP interface, an HDMI interface, a DVI interface, or a VGA interface), it may be determined that the input source accesses the electronic device in a wired manner.

In some implementations, when video data is input through the SDIO interface, the video data received by the SoC is a coded video (for example, the video data is coded in a format such as H.264 or H.265). However, when video data is input through a wired interface, the video data received by the SoC is original data that is not coded. When receiving coded video data, the SoC may determine that the video data is from the SDIO interface, that is, the input source device is connected to the electronic device in a wireless manner. When receiving uncoded video data, the SoC may determine that the video data is from a wired interface, that is, the input source device is connected to the electronic device in a wireless manner.

When the electronic device simultaneously displays at least two pieces of video data on the screen, each piece of video data may correspond to one window. In this case, when determining whether the input source device performs access in a wired manner, the electronic device needs to determine whether an input source device corresponding to an active window performs access in a wired manner.

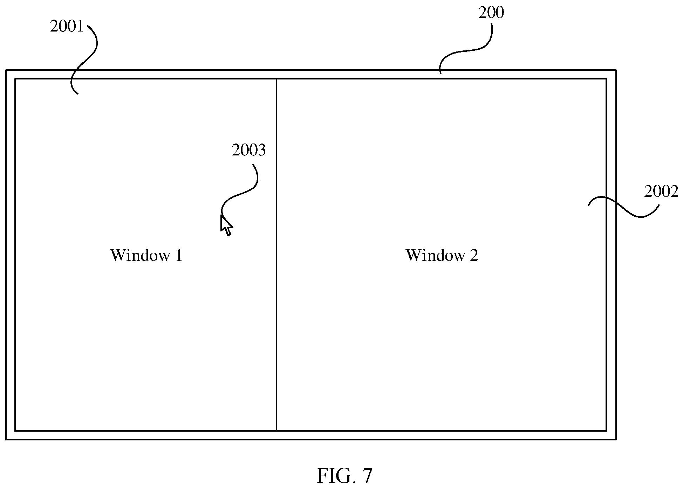

FIG. 7 is a schematic diagram of simultaneously displaying two pieces of video data on a screen. With reference to FIG. 6, two windows are displayed on the electronic device 200. A window 1 (2001) displays an interface from the smartphone 13, and a window 2 (2002) displays an interface from the notebook computer 14. A mouse pointer 2003 is a pointer corresponding to the Bluetooth mouse 11.

As shown in FIG. 7, when the mouse pointer is located in a range of the window 1 or when the interface corresponding to the window 1 is clicked by using a mouse, it may be determined that the window 1 is an activated window. The SoC needs to determine whether video data displayed in the window 1 is coded to obtain an access manner of an input source device corresponding to the window 1. In this embodiment, because the window 1 displays the interface from the smartphone, the video data displayed in the window 1 is coded, that is, the input source device corresponding to the window 1 is a wireless input source device. After determining, by using a window manager, that the input source device corresponding to the window 1 is a wireless input source device, the SoC may create an attribute identifier of the window 1 to mark that the window 1 corresponds to a wireless input source device. In a subsequent operation, the window 1 no longer needs to be determined, and only the attribute identifier of the window 1 needs to be read to determine that the window 1 corresponds to a wireless input source device.

When the mouse pointer is located in a range of the window 2 or when the interface corresponding to the window 2 is clicked by using the mouse, it may be determined that the window 2 is an activated window. The SoC needs to determine whether video data displayed in the window 2 is coded to obtain an access manner of an input source device corresponding to the window 2. In this embodiment, because the window 2 displays the interface from the notebook computer, the video data displayed in the window 2 is not coded, that is, the input source device corresponding to the window 2 is a wired input source device. After determining, by using the window manager, that the input source device corresponding to the window 2 is a wired input source device, the SoC may create an attribute identifier of the window 2 to mark that the window 2 corresponds to a wired input source device. In a subsequent operation, the window 2 no longer needs to be determined, and only the attribute identifier of the window 2 needs to be read to determine that the window 2 corresponds to a wired input source device.

S302: Determine whether control data in a first format is received; and perform S303 if the control data in the first format is received; or end the procedure if the control data in the first format is not received.

In some implementations, refer to the scenarios shown in FIG. 1, FIG. 5, and FIG. 6, an external control device (such as the Bluetooth mouse 11 or the Bluetooth keyboard 12) is connected to the electronic device in a wireless manner. In this scenario, after the external control device is connected to the electronic device in a wireless manner, the external device may respond to a user operation to send control data to the wireless module of the electronic device 200. The wireless module packages the control data into the control data in the first format based on a serial port format used by the SoC. The SoC receives, through a serial port, the control data, in the first format, that is from the wireless external device and that is forwarded by the wireless module. For example, in FIG. 5 or FIG. 6, a Bluetooth (BT) module in the wireless module communicates with the SoC through a UART serial port. However, a format of a serial port for communication between the wireless module and the SoC is not limited thereto, and may also be I2C, USB 2.0, or the like.

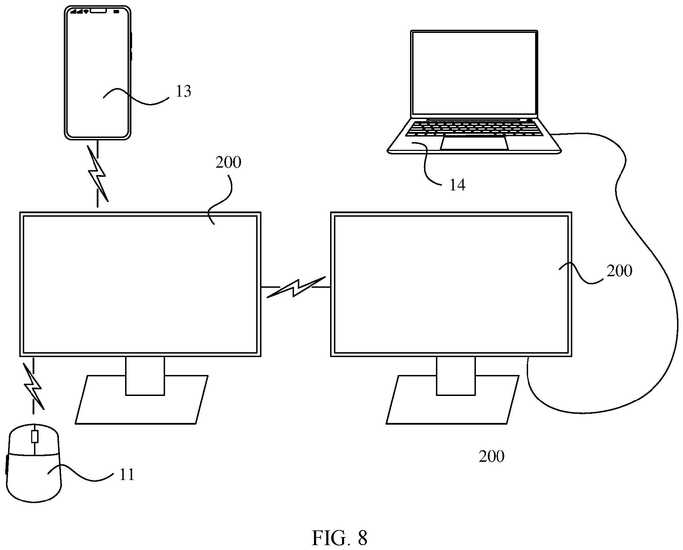

FIG. 8 shows another application scenario of a control method. The application scenario includes two electronic devices 200, and each electronic device 200 correspondingly displays an interface of an input source device. The two electronic devices 200 may communicate with each other by using a wireless module (for example, Bluetooth, Wi-Fi, or NFC). An external device is a Bluetooth mouse 11, an electronic device 200 connected to the Bluetooth mouse 11 is a first electronic device, and an electronic device 200 not connected to the Bluetooth mouse 11 is a second electronic device.

In this implementation, the first electronic device is connected to a wireless input source device (a smartphone 13) through Wi-Fi, and displays an interface corresponding to the smartphone 13. The second electronic device is connected to a notebook computer 14 through a Type-C interface, and displays an interface corresponding to the notebook computer 14. When the notebook computer 14 corresponding to the second electronic device is controlled by using the Bluetooth mouse connected to the first electronic device, the first electronic device may send, to the second electronic device by using the wireless module, control data received from a wireless control device (the Bluetooth mouse 11). After receiving the control data from the wireless control device by using the wireless module, the second electronic device packages the control data into control data in a first format based on a serial port used by an SoC. The SoC receives, through the serial port, the control data, in the first format, that is from the wireless external device and that is forwarded by the wireless module.

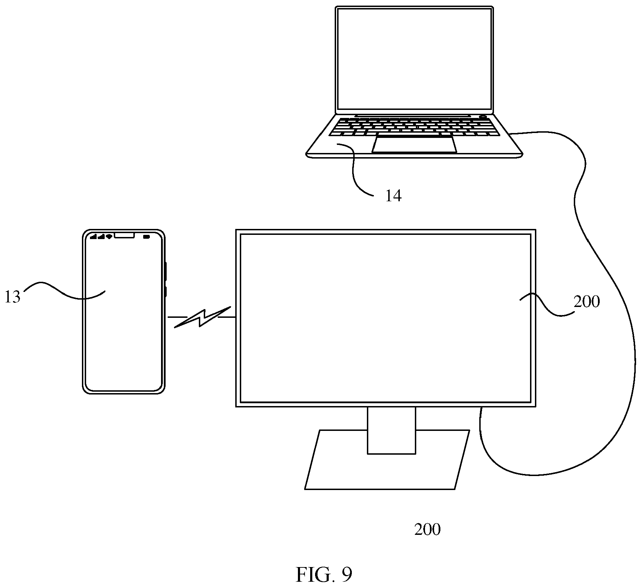

FIG. 9 shows another application scenario of a control method. The application scenario includes an electronic device 200, the electronic device 200 is connected to a smartphone 13 through Bluetooth or Wi-Fi communication, and the electronic device 200 is connected to a notebook computer 14 through a Type-C interface. An application program that simulates a wireless control device runs in the smartphone 13.

In this implementation, the wireless control device may be simulated by using the smartphone 13. When the smartphone 13 responds to a user operation to generate control data, the smartphone 13 sends the control data to a wireless module of the electronic device. After receiving the control data from the smartphone 13 by using the wireless module, the electronic device packages the control data into control data in a first format based on a serial port used by an SoC. The SoC receives, through the serial port, the control data, in the first format, that is from the smartphone 13 and that is forwarded by the wireless module.

The foregoing implementations in FIG. 1, FIG. 5, FIG. 6, FIG. 8, and FIG. 9 are merely examples for describing reception of the control data in the first format by the electronic device receives. In actual application, there may be more manners of receiving the control data in the first format. For example, the electronic device may access a network through Wi-Fi to receive the control data in the first format from the network. This is not limited herein.

S303: Convert the control data in the first format into control data in a second format by using a format conversion module.

S304: Send the control data in the second format to the input source device through a data interface corresponding to the control data in the second format.

In some implementations, because the wireless module communicates with a processor through a serial port, the control data in the first format may be a data format corresponding to the serial port. For example, when the wireless module communicates with the processor through a UART, after receiving the control data from the wireless control device, the wireless module may package, based on a UART communication protocol, the control data into a data format corresponding to the UART, that is, the control data in the first format.

In this embodiment, the control data may be control data in a human interface device (Human Interface Device, HID) format corresponding to a keyboard and/or a mouse. The control data received by the wireless module through Bluetooth is control data packaged by using a Bluetooth protocol. The wireless module may package the control data packaged by using the Bluetooth protocol again by using the UART communication protocol, to generate the control data in the first format, and then send the control data in the first format to the SoC through the UART2 interface shown in FIG. 5.

In some implementations, refer to the foregoing example, after receiving the control data in the first format, the SoC may first obtain, through parsing based on the UART communication protocol, the control data packaged by using the Bluetooth protocol, and then obtain the control data in the HID format through parsing based on a version of the Bluetooth protocol. The version of the Bluetooth protocol includes Bluetooth 1.1, Bluetooth 1.2, Bluetooth 2.0, Bluetooth 3.0, Bluetooth 4.0, Bluetooth 4.2, Bluetooth 5.0, Bluetooth 5.1, Bluetooth 5.2, and the like. A Bluetooth protocol of a later version may be backward compatible with a Bluetooth protocol of an earlier version.

When the SoC does not support an OTG (On The Go) protocol, the USB port on the SoC cannot send data to the wired input source device. In this case, a serial port-to-USB conversion chip needs to be added to an interface module, to convert a control signal (a control signal in the first format) output by an SoC serial port into a control signal in a USB format (a control signal in the second format), and then send the control signal in the second format to the wired input source device through a Type-C interface by using a USB multi-port forwarder (hub) in the interface module.

For example, as shown in FIG. 5, it is assumed that the SoC in FIG. 5 does not support OTG. The SoC is connected to a UART-to-USB conversion chip through a UART0; the SoC packages, based on a UART format requirement of the conversion chip, the HID control data obtained through parsing into control data (the to-be-converted control signal in the first format) that corresponds to the UART communication protocol and that meets the format requirement; and then, the SoC sends the to-be-converted control signal in the first format to the conversion chip through a UART0 interface. The conversion chip parses the to-be-converted control signal in the first format to obtain the HID control data, and the conversion chip packages the HID control data into the control data in the second format based on a USB communication protocol. Finally, the USB conversion chip controls a USB switching switch, to connect, to the USB hub, a pin that is in the Type-C interface and that is used to transmit a USB data signal, and send the control data in the second format to the wired input source device by using a USB 2.0 pin in the Type-C interface, so as to control the wired input source device.

When the SoC supports OTG (On The Go), a USB interface on the SoC can send data to a wired input source device. In this case, the SoC may package, based on the USB communication protocol, the control data in the HID format into a data format corresponding to the USB (that is, the control data in the second format), or encapsulate the control data in the HID format into a USB network data packet of a remote network driver interface specification (Remote Network Driver Interface Specification, RNDIS), and sends the control signal in the second format to the wired input source device by using the USB 2.0 pin in the Type-C interface.

For example, as shown in FIG. 6, it is assumed that the SoC in FIG. 6 supports OTG. The SoC packages, based on the USB communication protocol, the HID control data obtained through parsing into the control data in the second format, and sends the control data in the second format to the wired input source device by using a pin that is in the Type-C interface and that is used to transmit a USB data signal, so as to control the wired input source device.

In this embodiment, after it is determined that the input source device is a wired input source device, the control data in the first format from a wireless external device is intercepted and is converted into the control data format supported by the interface that connects the input source device and the electronic device, and the control data is sent to the input source device through the interface, to control the input source device.

Herein, FIG. 5 is used as an example to describe a possible implementation of the control method provided in this application. A central processing unit of the electronic device 200 is an SoC, a display processor is a scaler, the SoC does not support OTG, and the wireless module communicates with the SoC through a UART serial port. Video data is transmitted between the SoC and the scaler through an HDMI interface, and control data is transmitted between the SoC and the scaler through a UART3 interface. A Bluetooth mouse 11 is connected to the electronic device 200 through Bluetooth, a smartphone 13 is connected to the electronic device 200 through Wi-Fi, and a notebook computer 14 is connected to the electronic device 200 through a Type-C interface. An operating system running on the electronic device 200 is an Android system.

Optionally, a Bluetooth keyboard 12 may also be connected to the electronic device 200 through Bluetooth.

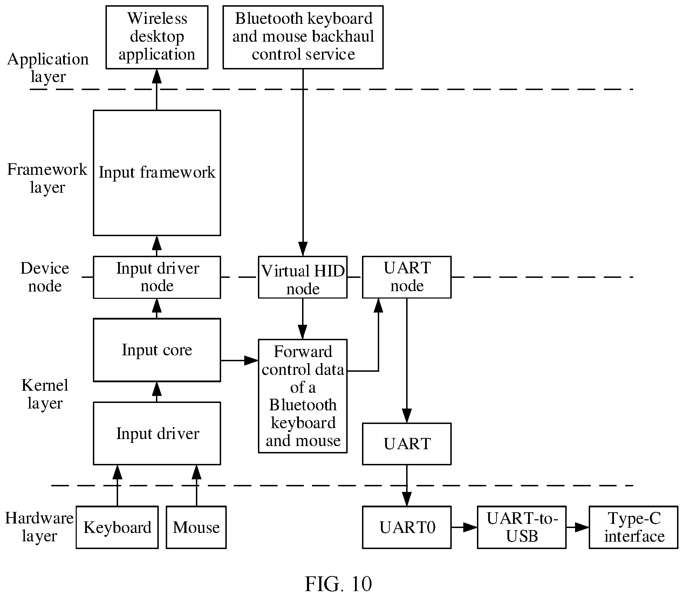

FIG. 10 is a schematic diagram of a data stream used when the electronic device 200 in FIG. 5 implements the control method provided in this application.

As shown in FIG. 5 and FIG. 10, when implementing the control method provided in this application, the electronic device 200 may first obtain, by using a Bluetooth keyboard and mouse backhaul control service, an access manner of an input source device in a current scenario, and learn whether a Bluetooth keyboard and mouse are connected. The Bluetooth keyboard and mouse backhaul control service can receive access data reported by the scaler, and determine the access manner of the input source device based on the access data. For example, the access data may be that an interactive synchronization service exists between the SoC and the scaler, to be specific, the SoC and the scaler transmit a control signal through a UART3, and the SoC sends video data to the scaler through an HDMI interface. When the access data indicates that there is an interactive synchronization service between the SoC and the scaler, it may be determined that the input source device is a wireless input source device.

Alternatively, the access data may be video data received after a DP interface of the scaler completes a handshake procedure specified in a DP protocol. The access data indicates that when the video data is received after the DP interface of the scaler completes the handshake procedure specified in the DP protocol, it may be determined that the input source device is a wired input source device.

The Bluetooth keyboard and mouse backhaul control service may further monitor broadcast of a system. When a Bluetooth keyboard or a Bluetooth mouse is connected to the electronic device 200, the system broadcasts access information of the Bluetooth device. After monitoring the access information of the Bluetooth device, the Bluetooth keyboard and mouse backhaul control service determines that a wireless control device accesses the electronic device 200.

When the Bluetooth keyboard and mouse backhaul control service determines that the input source device is a wired input source device and a wireless control device accesses the electronic device 200, control data of the Bluetooth keyboard and mouse in an input core may be intercepted by using a virtual HID node, and the control data of the Bluetooth keyboard and mouse is forwarded to a UART node.

For example, in response to a user operation, the Bluetooth keyboard and mouse generate control data in an HID format, package the control data in the HID format by using a Bluetooth protocol, encapsulate a packaged control data based on a UART communication protocol, and send an encapsulated control data to the SoC through a UART0. After parsing a data packet forwarded by the UART0, the SoC sends, to an input driver, the control data that is in the HID format and that is packaged by using the Bluetooth protocol. The input driver obtains the control data in the HID format through parsing, and sends the control data to the input core.

The virtual HID intercepts the control data in the HID format from the input core, encapsulates the control data in the HID format into control data in a UART format based on a format requirement of a UART-to-USB conversion chip, and then transparently transmits the control data in the UART format to a UART0 through the UART node to send the control data in the UART format to the conversion chip. The conversion chip converts the control data in the UART format into control data in a USB format, and sends the control data in the USB format to the input source device through a Type-C interface.

In some implementations, for example, for a format requirement of the UART-to-USB conversion chip, refer to Table 1.

**Table 1**

| Frame header | Address code | Command code | Subsequent data length | Subsequent data | Accumulated sum |
|---|---|---|---|---|---|
| HEAD | ADDR | CMD | LEN | DATA | SUM |
| 0x21 and 0xCD | 0x00 | 0x02 | 8 | 8 bytes | 0x?? |

The frame header, the address code, and the command code are fixed formats required by the conversion chip. The UART-to-USB conversion chip converts, only when a frame header, address code, and command code of the data in the UART format meet the values shown in Table 1, the control data in the UART format to generate the data in the USB format. The subsequent data length indicates a quantity of bytes of data that needs to be converted.

The subsequent data is determined based on the subsequent data length. In this embodiment, if the subsequent data length is 8, the subsequent data is data of 8 bytes. The accumulated sum indicates a length of all data.

In this embodiment, a length of an HID control signal sent by a mouse is 4 bytes, that is, the subsequent data length is 4, and 8 bits (bits) of a first byte respectively represent the following:
bit 7: 1 indicates that a change amount of a Y coordinate exceeds a range of -256 to 255, and 0 indicates that no overflow occurs;
bit 6: 1 indicates that a change amount of an X coordinate exceeds a range of -256 to 255, and 0 indicates that no overflow occurs;
bit 5: a sign bit whose Y coordinate changes, where 0 represents a positive number, to be specific, the mouse moves upwards; and 1 represents a negative number, to be specific, the mouse moves downwards;
bit 4: a sign bit whose X coordinate changes, where 0 represents a positive number, to be specific, the mouse moves rightwards; and 1 represents a negative number, to be specific, the mouse moves leftwards;
bit 3: fixed at 1;
bit 2: 1 indicates that a middle button is pressed;
bit 1: 1 indicates that a right button is pressed; and
bit 0: 1 indicates that a left button is pressed.

A second byte represents the change amount of the X coordinate, and forms a 9-bit signed number with the bit 4 of the first byte. A negative number indicates that the mouse is moved leftwards, and a positive number indicates that the mouse is moved rightwards. A two's complement represents the change amount.

A third byte is used for the change amount of the Y coordinate, and forms a 9-bit signed number with the bit 5 of the first byte. A negative number indicates that the mouse is moved downwards, and a positive number indicates that the mouse is moved upwards. A two's complement represents the change amount.

A fourth byte represents a change of a scroll wheel.

For example, when the left button on the mouse is pressed, corresponding data in the UART format is 0x21, 0xCD, 0x00, 0x02, 0x08, 0x01, 0x00, 0x00, and 0x00.

In this embodiment, a length of an HID control signal sent by a keyboard is 8 bytes, that is, the subsequent data length is 8, and 8 bits of a first byte respectively represent the following:
bit 7: indicating whether a right Window key is pressed, where 1 indicates that the right Window key is pressed, and 0 indicates that the right Window key is not pressed;
bit 6: indicating whether a right Alt key is pressed, where 1 indicates that the right Alt key is pressed, and 0 indicates that the right Alt key is not pressed;
bit 5: indicating whether a right Shift key is pressed, where 1 indicates that the right Shift key is pressed, and 0 indicates that the right Shift key is not pressed;
bit 4: indicating whether a right Ctrl key is pressed, where 1 indicates that the right Ctrl key is pressed, and 0 indicates that the right Ctrl key is not pressed;
bit 3: indicating whether a left Window key is pressed, where 1 indicates that the left Window key is pressed, and 0 indicates that the left Window key is not pressed;
bit 2: indicating whether a left Alt key is pressed, where 1 indicates that the left Alt key is pressed, and 0 indicates that the left Alt key is not pressed;
bit 1: indicating whether a left Shift key is pressed, where 1 indicates that the left Shift key is pressed, and 0 indicates that the left Shift key is not pressed; and
bit 0: indicating whether a left Ctrl key is pressed, where 1 indicates that the left Ctrl key is pressed, and 0 indicates that the left Ctrl key is not pressed.

A second byte is a reserved bit and has a value of 0x00.

A third byte to an eighth byte represent six keys and represent pressed keys.

For example, when a key "A" on the keyboard is pressed, corresponding data in the UART format is 0x21, 0xCD, 0x00, 0x02, 0x08, 0x00, 0x00, 0x04, 0x00, 0x00, 0x00, 0x00, and 0x00.

The HID control data in the USB format includes only key information in the subsequent data. For example, in the foregoing example in which the left button of the mouse is pressed, after the control data is converted into the HID control data in the USB format, only 0x01, 0x00, 0x00, and 0x00 are included. However, in the foregoing example in which the key "A" on the keyboard is pressed, after the control data is converted into the HID control data in the USB format, only 0x00, 0x00, 0x04, 0x00, 0x00, 0x00, 0x00 and 0x00 are included.

In some other implementations, the HID control data of the keyboard or the mouse may alternatively be implemented in another data format. A specific implementation format of the HID control data is not limited in this application.

In some other implementations, the virtual HID may alternatively intercept, from the input driver, the control data that is in the HID format and that is packaged by using the Bluetooth protocol; encapsulate, into control data in a UART format based on a format requirement of a UART-to-USB conversion chip, the control data in the HID format packaged by using the Bluetooth protocol; and then transparently transmit the control data in the UART format to a UART0 through the UART node to send the control data in the UART format to the conversion chip. The conversion chip converts the control data in the UART format into control data in a USB format, and sends the control data in the USB format to the input source device by using a USB 2.0 pin in a Type-C interface.

When the Bluetooth keyboard and mouse backhaul control service determines that the input source device is a wireless input source device and a wireless control device accesses the electronic device 200, the control data, in the HID format, that is received by the input driver and that is packaged by using the Bluetooth protocol may be parsed, and the control data is backhauled to the wireless input source device through Wi-Fi by using a wireless reverse control protocol.

The wireless reverse control protocol may be a wireless reverse control protocol in the HUAWEI Cast+ projection protocol, or may be a reverse control protocol in Miracast, that is, a user input back channel (User Input Back Channel, UIBC). The wireless reverse control protocol is not limited herein.

In this embodiment, when the electronic device 200 displays video data from the input source device, an access manner of the input source device is obtained, and the input source device is reversely controlled in a corresponding control manner based on different access manners. When switching an input source device, a user can control a displayed input source device without reconnecting the wireless control device to the input source device, thereby improving use experience of the user.

Herein, FIG. 6 is used as an example to describe another possible implementation of the control method provided in this application. A central processing unit of the electronic device 200 is an SoC, a display processor is integrated in the SoC, the SoC supports OTG, and the wireless module communicates with the SoC through a UART serial port. A Bluetooth mouse 11 is connected to the electronic device 200 through Bluetooth, a smartphone 13 is connected to the electronic device 200 through Wi-Fi, and a notebook computer 14 is connected to the electronic device 200 through a Type-C interface. An operating system running on the electronic device 200 is an Android system.

Optionally, a Bluetooth keyboard 12 may also be connected to the electronic device 200 through Bluetooth.

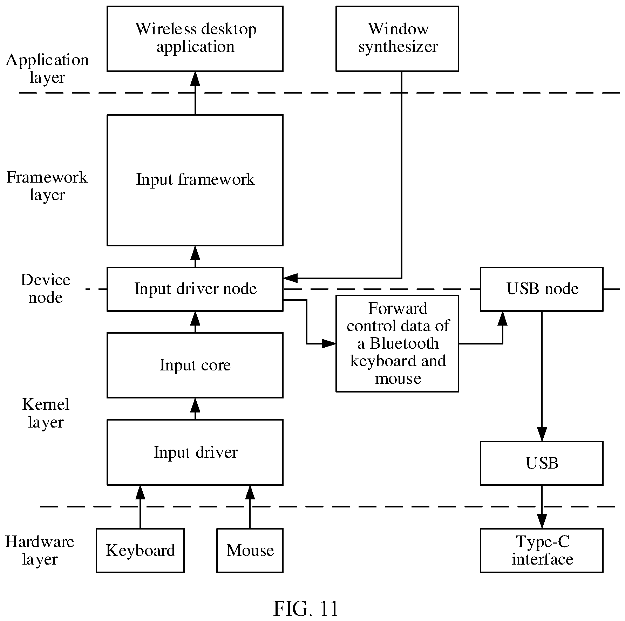

FIG. 11 is a schematic diagram of a data stream used when the electronic device 200 in FIG. 6 implements the control method provided in this application.

As shown in FIG. 6, FIG. 7, and FIG. 11, the electronic device 200 receives, through Wi-Fi, video data sent by the smartphone 13, where the video data includes an interface of the smartphone 13. The electronic device 200 further receives, by using a pin that is in a Type-C interface and that is used to transmit a DP signal, video data sent by the notebook computer 14, where the video data includes an interface of the notebook computer 14. The SoC may indicate a window synthesizer to distribute video data input by each input source device, generate two active windows (Activities) used to display videos, and display video data from different input source devices by using the two activities. For example, as shown in FIG. 7, the interface of the smartphone 13 may be displayed by using the window 1 (2001), and the interface from the notebook computer 14 may be displayed by using the window 2 (2002).

In this embodiment, the window synthesizer may detect whether video data is coded, to determine an access manner of an input source device corresponding to each activity. When detecting that the video data displayed in the activity is coded video data, the window synthesizer may determine that the input source device corresponding to the activity is a wireless input source device. When detecting that the video data displayed in the activity is uncoded video data, the window synthesizer may determine that the input source device corresponding to the activity is a wired input source device.

In this embodiment, the window synthesizer may determine, by monitoring system broadcast, that a wireless control device accesses the electronic device 200.

After determining that a wireless control device accesses the electronic device, the window synthesizer may determine an active activity. For example, when the wireless control device is a mouse, coordinates of a mouse pointer on a screen may be obtained. When the coordinates of the mouse pointer fall within a range of the window 1, the window 1 is determined as the active activity. When the coordinates of the mouse pointer fall within a range of the window 2, the window 2 is determined as the active activity.

When determining that an input source device corresponding to the active activity is a wired input source device and a wireless control device accesses the electronic device 200, the window synthesizer may obtain control data of a Bluetooth keyboard and mouse in an input driver node, and forward the control data of the Bluetooth keyboard and mouse to a USB node.

For example, in response to a user operation, the Bluetooth keyboard and mouse generate control data in an HID format, package the control data in the HID format by using a Bluetooth protocol, encapsulate a packaged control data based on a UART communication protocol, and send an encapsulated control data to the SoC through a UART0. After parsing a data packet forwarded by the UART0, the SoC sends, to an input driver, the control data that is in the HID format and that is packaged by using the Bluetooth protocol. The input driver obtains the control data in the HID format through parsing, and sends the control data to an input core. The input core sends the control data in the HID format to the input driver node.

The window synthesizer obtains the control data in the HID format from the input driver node, encapsulates the control data in the HID format into control data in a USB format or encapsulates the control data in the HID format into a USB network data packet of an RNDIS, and sends the USB network data packet to the USB node. The USB node sends the USB network data packet to the input source device through a Type-C interface.

In some other implementations, a virtual HID may alternatively intercept, from the input driver, the control data that is in the HID format and that is packaged by using the Bluetooth protocol; and encapsulate, into control data in a USB format, the control data that is in the HID format and that is packaged by using the Bluetooth protocol, or encapsulate the control data in the HID format into a USB network data packet of an RNDIS; and then, send the USB network data packet to the input source device by using a pin that is in a Type-C interface and that is used to transmit a USB 2.0 signal.

When determining that the input source device corresponding to the activity is a wireless input source device and a wireless control device accesses the electronic device 200, the window synthesizer may parse the control data, in the HID format, that is received by the input driver and that is packaged by using the Bluetooth protocol, and backhaul the control data to the wireless input source device through Wi-Fi by using a wireless reverse control protocol.

The wireless reverse control protocol may be a wireless reverse control protocol in the HUAWEI Cast+ projection protocol, or may be a reverse control protocol, that is, a UIBC, in Miracast. The wireless reverse control protocol is not limited herein.

In this embodiment, when video data from a plurality of input source devices is displayed by using the electronic device 200, each input source device may be reversely controlled in a corresponding control manner based on an access manner of the input source device. A user can simultaneously watch interfaces of the plurality of input source devices, and can also control each input source device by using a wireless control device without switching an input source. This increases an application scenario of the control method provided in this application, thereby improving use experience of the user.

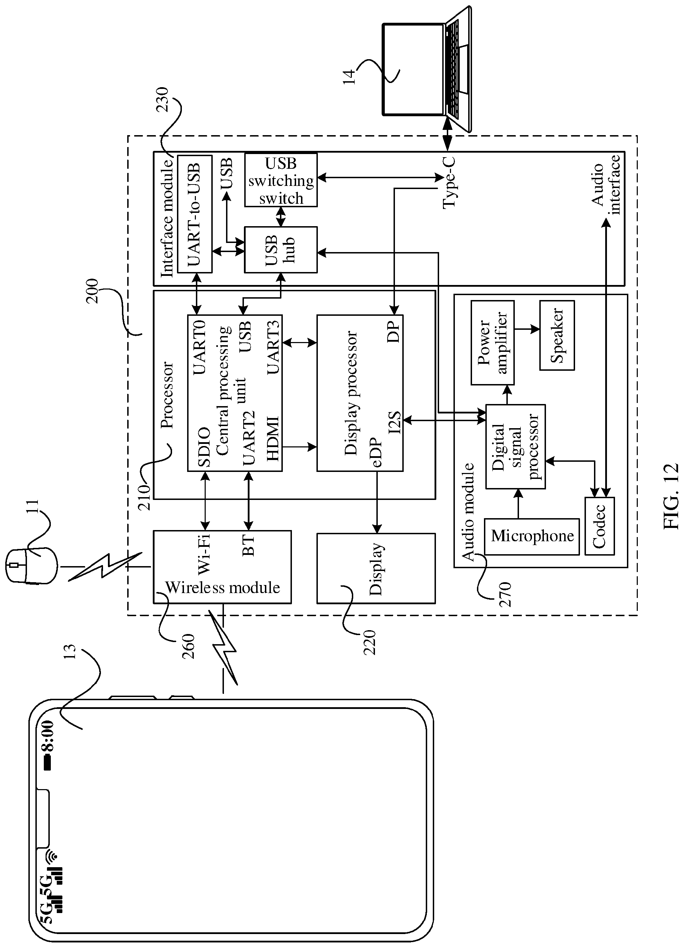

FIG. 12 shows another application scenario of a control method. In addition to the components shown in FIG. 5, an audio module 270 is further included.

The audio module 270 includes a digital signal processor (Digital Signal Processor, DSP), a power amplifier (Power Amplifier, PA), a codec (Codec), a microphone, and a speaker. The DSP is connected to the display processor by using an inter-integrated circuit sound (Inter-IC Sound, I2S) bus. The microphone is connected to the DSP, and is configured to input audio to the DSP. The DSP is connected to the PA, and the PA is connected to the speaker. The PA may receive audio data from the DSP, amplify power of audio, and play the audio by using the speaker. The codec is connected to the DSP and is further connected to an audio interface. The codec may receive audio data from the DSP, converts the digital audio data into an analog audio signal, and sends the analog audio signal through the audio interface.

Alternatively, the codec may receive an analog audio signal from the audio interface, convert the analog audio signal into digital audio data, and then send the digital audio data to the DSP for processing.

In some implementations, the display processor may send, to the DSP through an I2S interface, audio data in video data transmitted through a DP interface or an HDMI interface. The DSP sends the audio data from the video data to the PA. The PA amplifies audio and then plays the audio by using the speaker. Alternatively, the DSP may convert the audio data from the video data into an analog audio signal by using the codec, and send, through the audio interface, the analog audio signal to a headset connected to the audio interface, to play the analog audio signal by using the headset.

In some other implementations, the microphone may receive audio data, and process the audio data by using the DSP. Then, the DSP encapsulates the audio data as a USB format, and sends the audio data in the USB format to the SoC, or transparently transmits, by using a USB hub and a USB switching switch, the audio data in the USB format to an input source device connected to a Type-C interface.

Similarly, an analog audio signal may alternatively be collected by using a headset microphone connected to the audio interface, and is converted into digital audio data by using the codec, and then the digital audio data is sent to the DSP. The DSP processes the audio data, encapsulates the audio data as a USB format, and sends the audio data in the USB format to the SoC, or transparently transmits, by using a USB hub and a USB switching switch, the audio data in the USB format to an input source device connected to a Type-C interface.

The audio module is added to the electronic device 200, so that when an interface of an input source device is displayed, audio from the input source device can be played without adding an additional audio device. This can better meet a user requirement, thereby improving use experience of a user.

It should be understood that in the foregoing embodiments, sequence numbers of the steps do not mean execution sequences. The execution sequences of the processes should be determined based on functions and internal logic of the processes, and should not constitute any limitation on the implementation processes of embodiments of this application.

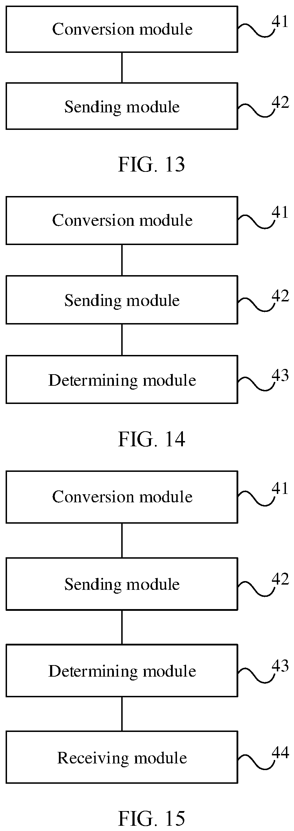

Corresponding to the control method provided in the foregoing embodiments, FIG. 13 is a block diagram of a structure of a control apparatus according to an embodiment of this application. For ease of description, only a part related to this embodiment of this application is shown.

As shown in FIG. 13, the control apparatus includes:
a conversion module 41, configured to: if an electronic device receives control data in a first format when determining that an input source device is connected to the electronic device in a wired manner, convert the control data in the first format into control data in a second format, where the second format is determined by the electronic device based on a type of an interface that connects the input source device and the electronic device; and
a sending module 42, configured to send the control data in the second format to the input source device through the interface that connects the input source device and the electronic device.

In some implementations, a processing module of the electronic device includes a central processing unit and a display processor, a first communication serial port on the display processor is connected to the central processing unit, and a first video interface on the display processor is connected to the interface that connects the input source device and the electronic device.

FIG. 14 is a block diagram of a structure of another control apparatus according to an embodiment of this application.

The display processor sends a receiving status of the first video interface to the central processing unit through the first communication serial port, where the receiving status includes that video data is received or that no video data is received.

As shown in FIG. 14, the control apparatus further includes a determining module 43, configured to: when the received receiving status of the first video interface is that video data is received, determine that the input source device is connected to the electronic device in a wired manner.

In some implementations, a processing module of the electronic device includes a central processing unit, and a second video interface on the central processing unit receives video data from the input source device.

When the video data received by the second video interface is uncoded video data, the determining module 43 is specifically configured to determine that the input source device is connected to the electronic device in a wired manner.

In some implementations, a processing module of the electronic device includes a central processing unit, the central processing unit includes at least two video interfaces, the video interfaces are configured to receive video data from the input source device, and the electronic device respectively displays the video data from the video interfaces in different windows.

The determining module 43 is further configured to: determine a first window in at least two windows, where the first window is an active window; and when video data received by a video interface corresponding to the first window is uncoded video data, determine that an input source device corresponding to the first window is connected to the electronic device in a wired manner.

FIG. 15 is a block diagram of a structure of another control apparatus according to an embodiment of this application.

In some implementations, a wireless module in the electronic device is connected to the central processing unit through a second communication serial port.

As shown in FIG. 15, the control apparatus further includes a receiving module 44, configured to receive the control data in the first format through the second communication serial port.

In some implementations, a wireless control device is communicatively connected to the wireless module, and the control data in the first format is generated by the wireless control device in response to a user operation.

In some implementations, the wireless module is communicatively connected to a network, and the control data in the first format is control data received by the wireless module from the network.

In some implementations, when the electronic device supports an OTG protocol, the conversion module 41 is specifically configured to convert the control data in the first format into the control data in the second format by using the central processing unit.

In some implementations, when the electronic device does not support an OTG protocol, the electronic device includes a conversion chip, and a third communication serial port on the central processing unit is communicatively connected to the conversion chip.

The conversion module 41 is specifically configured to: send the control data in the first format to the conversion chip through the third communication serial port, and convert the control data in the first format into the control data in the second format by using the conversion chip.

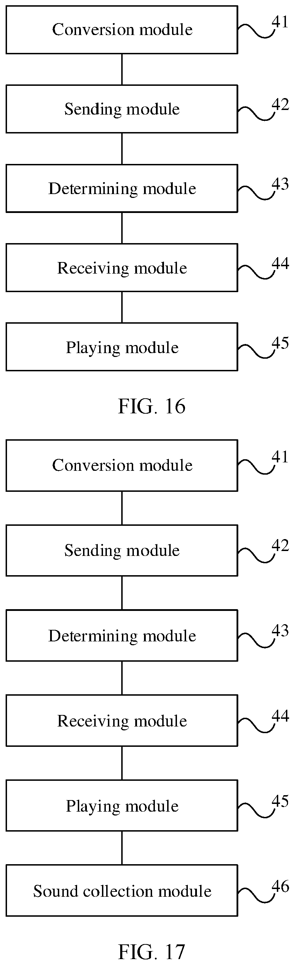

FIG. 16 is a block diagram of a structure of another control apparatus according to an embodiment of this application.

In some implementations, the electronic device further includes a speaker, and the video data received by the electronic device further includes audio data.

As shown in FIG. 16, the control apparatus further includes a playing module 45, configured to play the audio data through the speaker.

FIG. 17 is a block diagram of a structure of another control apparatus according to an embodiment of this application.

In some implementations, the electronic device further includes a microphone.

As shown in FIG. 17, the control apparatus further includes a sound collection module 46, configured to send audio data collected by the microphone to the input source device through the interface that connects the input source device and the electronic device.

It should be noted that content such as information exchange and an execution process between the foregoing modules is based on a same concept as that in the method embodiments of this application. Therefore, for specific functions and technical effects of the content, refer to the method embodiments. Details are not described herein again.

Persons skilled in the art may clearly understand that, for the purpose of convenient and brief description, division of the foregoing functional units or modules is merely used as an example for description. In actual application, the foregoing functions may be allocated to different functional units or modules for completion based on a requirement, that is, an inner structure of the apparatus is divided into different functional units or modules to complete all or some of the functions described above.

Functional units and modules in embodiments may be integrated into one processing unit, or each of the units may exist alone physically, or two or more units may be integrated into one unit. The integrated unit may be implemented in a form of hardware, or may be implemented in a form of a software functional unit.

In addition, specific names of the functional units and modules are merely intended to distinguish between the functional units and modules, but are not intended to limit the protection scope of this application. For specific working processes of the units or modules in the foregoing system, refer to corresponding processes in the foregoing method embodiments. Details are not described herein again.

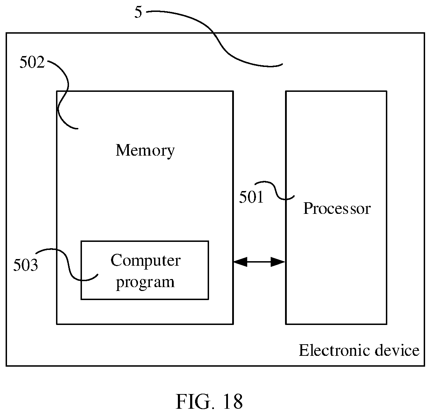

FIG. 18 is a schematic diagram of a structure of an electronic device according to an embodiment of this application. As shown in FIG. 18, the electronic device 5 in this embodiment includes:
at least one processor 501 (only one processor is shown in FIG. 18), a memory 502, and a computer program 503 that is stored in the memory 502 and that can run on the at least one processor 501. When the processor 501 executes the computer program 503, the steps in the foregoing control method embodiments are implemented.

The electronic device 5 may be an electronic device having a display function, such as a display, a smart screen, a projector, a television, or a large-screen device. The electronic device may include but is not limited to the processor 501 and the memory 502. Persons skilled in the art may understand that FIG. 18 is merely an example of the electronic device 5, and does not constitute a limitation on the electronic device 5. The electronic device 5 may include more or fewer components than those shown in the figure, or combine some components, or have different components. For example, the electronic device 5 may further include an input/output device, a network access device, or the like.

The processor 501 may be a central processing unit (Central Processing Unit, CPU), or the processor 501 may be another general-purpose processor, a digital signal processor (Digital Signal Processor, DSP), an application-specific integrated circuit (Application-Specific Integrated Circuit, ASIC), an SoC, a field-programmable gate array (Field-Programmable Gate Array, FPGA) or another programmable logic device, a discrete gate or transistor logic device, a discrete hardware component, or the like. The general-purpose processor may be a microprocessor, or the processor may be any conventional processor or the like.

In some embodiments, the memory 502 may be an internal storage unit of the electronic device 5, for example, a hard disk or a memory of the electronic device 5. In some other embodiments, the memory 502 may alternatively be an external storage device of the electronic device 5, for example, a plug-in hard disk, a smart storage card (Smart Media Card, SMC), a secure digital (Secure Digital, SD) card, or a flash card (Flash Card) that is disposed on the electronic device 5.

Further, the memory 502 may alternatively include both an internal storage unit and an external storage device of the electronic device 5. The memory 502 is configured to store an operating system, an application program, a boot loader (Boot Loader), data, another program, or the like, for example, program code of a computer program. The memory 502 may be further configured to temporarily store data that has been output or is to be output.

An embodiment of this application further provides a computer-readable storage medium. The computer-readable storage medium stores a computer program. When the computer program is executed by a processor, the steps in the foregoing method embodiments may be implemented.

An embodiment of this application provides a computer program product. When the computer program product is run on a mobile terminal, the mobile terminal is enabled to implement the steps in the foregoing method embodiments when executing the computer program product.

An embodiment of this application provides a chip system. The chip system includes a memory and a processor. The processor executes a computer program stored in the memory, to implement the steps in the foregoing method embodiments.

An embodiment of this application provides a chip system. The chip system includes a processor. The processor is coupled to a computer-readable storage medium, and the processor executes a computer program stored in the computer-readable storage medium, to implement the steps in the foregoing method embodiments.

When the control method provided in this application is implemented in a form of a software functional unit and sold or used as an independent product, the control method may be stored in a computer-readable storage medium. Based on such an understanding, all or some of the procedures in the methods in the foregoing embodiments of this application may be implemented by a computer program instructing related hardware. The computer program may be stored in a computer-readable storage medium. When the computer program is executed by a processor, the steps in the foregoing method embodiments may be implemented.

The computer program includes computer program code. The computer program code may be in a source code form, an object code form, an executable file form, some intermediate forms, or the like. The computer-readable medium may include at least any entity or apparatus that can carry the computer program code to an electronic device, a recording medium, a computer memory, a read-only memory (ROM, Read-Only Memory), a random access memory (RAM, Random Access Memory), an electrical carrier signal, a telecommunication signal, and a software distribution medium, for example, a USB flash drive, a removable hard disk, a magnetic disk, or an optical disk. In some jurisdictions, the computer-readable medium cannot be the electrical carrier signal or the telecommunication signal according to legislation and patent practice.

In the foregoing embodiments, the description of each embodiment has a focus. For a part that is not described in detail or recorded in an embodiment, refer to related descriptions in other embodiments.

Persons of ordinary skill in the art may be aware that, the units and the algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. Skilled persons may use different methods to implement the described functions for each particular application, but this implementation should not be considered as beyond the scope of this application.

In the embodiments provided in this application, it should be understood that the disclosed method, apparatus, and electronic device may be implemented in other manners. For example, the apparatus embodiments described above are merely examples. For example, division of the modules or units is merely logical function division, and there may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be in an electrical form, a mechanical form, or another form.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

Finally, it should be noted that, the foregoing descriptions are merely specific implementations of this application, but are not intended to limit the protection scope of this application. Any variation or replacement made within the technical scope disclosed in this application shall fall within the protection scope of this application. Therefore, the protection scope of this application shall be subject to the protection scope of the claims.

## Claims

1. A control method, comprising:
if an electronic device receives control data in a first format when determining that an input source device is connected to the electronic device in a wired manner, converting the control data in the first format into control data in a second format, wherein the second format is determined by the electronic device based on a type of an interface that connects the input source device and the electronic device; and
sending the control data in the second format to the input source device through the interface that connects the input source device and the electronic device.

2. The method according to claim 1, wherein a processing module of the electronic device comprises a central processing unit and a display processor, a first communication serial port on the display processor is connected to the central processing unit, and a first video interface on the display processor is connected to the interface that connects the input source device and the electronic device; and
the determining that an input source device is connected to the electronic device in a wired manner comprises:
sending, by the display processor, a receiving status of the first video interface to the central processing unit through the first communication serial port, wherein the receiving status comprises that video data is received or that no video data is received; and
when the received receiving status of the first video interface is that video data is received, determining, by the central processing unit, that the input source device is connected to the electronic device in a wired manner.

3. The method according to claim 1, wherein a processing module of the electronic device comprises a central processing unit, and a second video interface on the central processing unit receives video data from the input source device; and
the determining that an input source device is connected to the electronic device in a wired manner comprises:
when the video data received by the second video interface is uncoded video data, determining, by the central processing unit, that the input source device is connected to the electronic device in a wired manner.

4. The method according to claim 1, wherein a processing module of the electronic device comprises a central processing unit, the central processing unit comprises at least two video interfaces, the video interfaces are configured to receive video data from the input source device, and the electronic device respectively displays the video data from the video interfaces in different windows; and
the determining that an input source device is connected to the electronic device in a wired manner comprises:
determining a first window in at least two windows, wherein the first window is an active window; and
when video data received by a video interface corresponding to the first window is uncoded video data, determining, by the central processing unit, that an input source device corresponding to the first window is connected to the electronic device in a wired manner.

5. The method according to any one of claims 2 to 4, wherein a wireless module in the electronic device is connected to the central processing unit through a second communication serial port; and
the receiving, by an electronic device, control data in a first format comprises:
receiving the control data in the first format through the second communication serial port.

6. The method according to claim 5, wherein a wireless control device is communicatively connected to the wireless module; and
the control data in the first format is generated by the wireless control device in response to a user operation.

7. The method according to claim 5 or 6, wherein the wireless module is communicatively connected to a network; and
the control data in the first format is control data received by the wireless module from the network.

8. The method according to any one of claims 2 to 7, wherein when the electronic device supports an OTG protocol, the converting the control data in the first format into control data in a second format comprises:
converting, by the central processing unit, the control data in the first format into the control data in the second format.

9. The method according to any one of claims 2 to 7, wherein when the electronic device does not support an OTG protocol, the electronic device comprises a conversion chip, and a third communication serial port on the central processing unit is communicatively connected to the conversion chip; and
the converting the control data in the first format into control data in a second format comprises:
sending, by the central processing unit, the control data in the first format to the conversion chip through the third communication serial port; and
converting the control data in the first format into the control data in the second format by the conversion chip.

10. The method according to any one of claims 2 to 4, wherein the electronic device further comprises a speaker, and the video data received by the electronic device further comprises audio data; and
the electronic device plays the audio data by using the speaker.

11. The method according to any one of claims 1 to 10, wherein the electronic device further comprises a microphone; and
the electronic device sends audio data collected by the microphone to the input source device through the interface that connects the input source device and the electronic device.

12. A control apparatus, comprising:
a conversion module, configured to: if an electronic device receives control data in a first format when determining that an input source device is connected to the electronic device in a wired manner, convert the control data in the first format into control data in a second format, wherein the second format is determined by the electronic device based on a type of an interface that connects the input source device and the electronic device; and
a sending module, configured to send the control data in the second format to the input source device through the interface that connects the input source device and the electronic device.

13. An electronic device, comprising a memory, a processor, and a computer program that is stored in the memory and that can be run on the processor, wherein when the processor executes the computer program, the method according to any one of claims 1 to 11 is implemented.

14. A computer-readable storage medium, wherein the computer-readable storage medium stores a computer program, and when the computer program is executed by a processor, the method according to any one of claims 1 to 11 is implemented.
